(19) Europäisches Patentamt
European Patent Office
Office européen des brevets

(11) **EP 3 154 189 A2**

(12) **EUROPÄISCHE PATENTANMELDUNG**

(43) Veröffentlichungstag:
**12.04.2017 Patentblatt 2017/15**

(51) Int Cl.:
*H02P 29/024* (2016.01)    *H02P 29/032* (2016.01)
*H02P 6/24* (2006.01)

(21) Anmeldenummer: **16002087.1**

(22) Anmeldetag: **27.09.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **02.10.2015 DE 102015012688**

(71) Anmelder: **Texmag GmbH Vertriebsgesellschaft 8800 Thalwil (CH)**

(72) Erfinder:
• **Hurka, Florian**
  **86459 Gessertshausen (DE)**
• **Eisen, Jürgen**
  **86199 Augsburg (DE)**

(74) Vertreter: **Witzany, Manfred**
  **Patentanwalt**
  **Falkenstrasse 4**
  **85049 Ingolstadt (DE)**

(54) **VORRICHTUNG MIT MINDESTENS EINEM WECHSELSTROMMOTOR**

(57) Eine Vorrichtung (1) besteht aus einem Wechselstrommotor (2), einem Controller (5) und einem Leistungstreiber (6). Der Controller (5) und der Leistungstreiber (6) werden dabei einerseits von einer Betriebsspannung (9) und andererseits von einer Generatorspannung (10) des Wechselstrommotors (2) mit elektrischer Energie versorgt. Bei fehlender Betriebsspannung (9) aber vorhandener Generatorspannung (10) wird die Magnetisierung des Wechselstrommotors (2) derart beeinflusst, dass die Generatorspannung (10) zwischen zwei Grenzwerten gehalten wird, um einerseits genügend Energie für den Betrieb des Controllers (5) und des Leistungstreibers (6) zu erzeugen und andererseits erlaubte Spannungsgrenzen des Leistungstreibers (6) einzuhalten. (Figur 1)

*Fig. 1*

**Beschreibung**

Die Erfindung betrifft eine Vorrichtung mit mindestens einem Wechselstrommotor, mindestens einer Ansteuerung und mindestens einem vom Wechselstrommotor angetriebenen Objekt.

Aus der DE 195 09 974 C2 ist eine gattungsgemäße Vorrichtung bekannt. Sie weist einen Wechselstrommotor auf, der von einer Ansteuerung, nämlich einem von einer Betriebsspannung versorgten Inverter angesteuert wird. Diese Ansteuerung weist elektronische Schaltelemente in der Regel in der Form von Transistoren auf, die nur eine beschränkte Spannungsfestigkeit besitzen. Dieser Wechselstrommotor treibt ein beliebiges Objekt an. Dabei kann es vorkommen, dass der Wechselstrommotor ein abbremsendes Drehmoment entgegen der Drehrichtung erzeugt. In diesem Fall spricht man daher vom sogenannten Generatorbetrieb. Dabei bremst der Wechselstrommotor das Objekt ab, wobei er gleichzeitig elektrische Energie erzeugt. Diese elektrische Energie kann zu relativ hohen Spannungen führen, die die Ansteuerung überfordern und zum Spannungsdurchbruch führen können. Um dies zu vermeiden, wird die Magnetisierung des Wechselstrommotors im Generatorbetrieb erhöht, wodurch sich die magnetischen Verluste entsprechend erhöhen und die erzeugte elektrische Energie in Wärme umgewandelt wird. Damit ist die Ansteuerung gut vor Überspannung des Wechselstrommotors im Generatorbetrieb geschützt. Diese bekannte Vorrichtung hat sich in der Praxis vielfach bewährt und bildet den Ausgangspunkt der vorliegenden Erfindung.

Der Erfindung liegt die Aufgabe zugrunde, eine Vorrichtung der eingangs genannten Art zu schaffen, die den Schutz der Ansteuerung des Wechselstrommotors verbessert.

Diese Aufgabe wird erfindungsgemäß mit den folgenden Merkmalen gelöst.

Die erfindungsgemäße Vorrichtung weist mindestens einen Wechselstrommotor, mindestens eine Ansteuerung und mindestens ein vom mindestens einen Wechselstrommotor angetriebenes Objekt auf. Dabei ist es unerheblich, ob dieser Antrieb unmittelbar oder mittelbar, beispielsweise über ein oder mehrere Getriebe erfolgt. Unerheblich ist außerdem, wie dieses Objekt angetrieben wird. Beispielsweise könnte das Objekt zur Drehung, Verschiebung oder Bewegung entlang einer beliebigen Kurve angetrieben werden. Diese Aufzählung ist jedoch nicht abschließend zu verstehen. Beim Antrieb des Objekts kann es aber auch vorkommen, dass das Objekt in seiner Bewegung gebremst wird. Dabei wirkt das Drehmoment des mindestens einen Wechselstrommotors abbremsend entgegen der Drehrichtung, so dass der mindestens eine Wechselstrommotor im Generatorbetrieb mechanische Energie in elektrische Energie umwandelt. Um die mindestens eine Ansteuerung vor zu hohen Spannungsspitzen der Generatorspannung des mindestens einen Wechselstrommotors zu schützen, wird die Magnetisierung des mindestens einen Wechselstrommotors verändert, so dass die im Generatorbetrieb erzeugte elektrische Energie in Wärme umgewandelt wird. Hierdurch ist der mindestens eine Wechselstrommotor im laufenden Betrieb zuverlässig vor Überspannungsspitzen im Generatorbetrieb geschützt. Es kann jedoch vorkommen, dass der mindestens eine Wechselstrommotor auch bei abgeschalteter Betriebsspannung in den Generatorbetrieb gerät, wenn beispielsweise das mindestens eine Objekt durch äußere Umstände bewegt wird. Derartige äußere Umstände können beispielsweise am Überschreiten von Trägheitskräften liegen, wenn die gesamte Vorrichtung beispielsweise bei Transport oder Montage beschleunigt wird. Alternativ ist es auch vorstellbar, dass das mindestens eine Objekt durch Schwerkraft, Federkraft oder Druckkraft eines Fluids beschleunigt wird. Diese Aufzählung ist nicht abschließend zu verstehen. In allen diesen Fällen wird dem mindestens einen Wechselstrommotor aufgrund des sich bewegenden Objekts mechanische Energie zugeführt, die dieser im Generatorbetrieb in elektrische Energie umwandelt. Ohne anliegende Versorgungsspannung ist es jedoch der Ansteuerung nicht möglich, auf diesen gefährlichen Betriebszustand zu reagieren. Erfindungsgemäß wird daher vorgeschlagen, dass die Vorrichtung mindestens einen Controller aufweist, der bei abgeschalteter Versorgungsspannung vom mindestens einen Wechselstrommotor mit elektrischer Energie versorgt wird. Damit wird die vom mindestens einen Wechselstrommotor im Generatorbetrieb erzeugte elektrische Energie genutzt, den mindestens einen Controller zu betreiben, auch wenn keinerlei Versorgungsspannung anliegt. Es hat sich jedoch herausgestellt, dass diese Maßnahme für sich alleingenommen nicht ausreicht, um die Ansteuerung des mindestens einen Wechselstrommotors vor Überspannung zu schützen. Hierbei ergibt sich das folgende Problem: Ist das mindestens eine Objekt beispielsweise eine angehobene Last, die zum Beispiel mittels eines nicht selbsthemmenden Getriebes mit dem mindestens einen Wechselstrommotor gekoppelt ist, so treibt diese Last den mindestens einen Wechselstrommotor durch Zufuhr von Bewegungsenergie an, worauf der mindestens eine Controller durch Erhöhung der Magnetisierung des mindestens einen Wechselstrommotors der Spannungserzeugung entgegenwirkt und thermische Energie erzeugt. Hierdurch würde die Last bis zum Stillstand abgebremst werden, wodurch dem mindestens einen Controller die elektrische Energie entzogen würde, der hieraufhin nicht mehr auf den mindestens einen Wechselstrommotor einwirken könnte. Dies führt jedoch zum Verlust der Bremswirkung und damit wieder zu einer Beschleunigung der Last, so dass das mindestens eine Objekt in diesem Fall stoßweise recht heftig abgebremst und wieder beschleunigt wird. Dieses stoßweise Abbremsen ist weder für die Mechanik noch für den mindestens einen Wechselstrommotor erstrebenswert, da es zu erheblichem Verschleiß führen kann. Außerdem besteht dabei durchaus die Gefahr, dass Spannungsspitzen im Generatorbetrieb erzeugt werden, die über den erlaubten Spannungswerten der mindestens einen Ansteuerung liegen. Um diese Probleme zu lösen, wird vorgeschlagen, dass der mindestens eine Controller die Magnetisierung des mindestens einen Wechselstrommotors derart beeinflusst, dass dessen Generatorspannung zwischen zwei vorgegebenen Grenzwerten liegt. Diese beiden Grenzwerte dürfen auch gleich sein, so dass der Controller die Generatorspannung in diesem Fall auf den gemeinsamen Grenzwert regelt. Dies ist jedoch nicht zwingend erforderlich. Der Controller versucht demnach erst gar nicht, die Drehzahl des mindestens einen Wechselstrommotors auf Null zu bringen, sondern begrenzt die Drehzahl innerhalb eines vorgegebenen Fensters. Damit wird das mindestens eine Objekt nicht auf die Geschwindigkeit Null abgebremst, die gesamte Anordnung sorgt jedoch für eine Begrenzung der Generatorspannung, die vom mindestens einen Wechselstrommotor erzeugt wird, auf erlaubte Werte. Außerdem wird die Generatorspannung auch nach unten begrenzt, so dass dem mindestens einen Controller für eine ausreichende Zeit elektrische Energie zur Verfügung gestellt wird, um die Magnetisierung des mindestens einen Wechselstrommotors zu beeinflussen. Dieser Zustand bleibt dann so lange aufrecht, bis das mindestens eine Objekt an einen mechanischen Anschlag gerät oder die von außen zugeführte Bewegungsenergie aufgebraucht ist. Damit kann diese Vorrichtung den mindestens einen Wechselstrommotor auch in Betriebszuständen schützen, in denen keine Betriebsspannung anliegt, so dass der Schutz der mindestens einen Ansteuerung des mindestens einen Wechselstrommotors entsprechend verbessert ist.

Um sicherzustellen, dass der mindestens eine Controller seine Schutzfunktion ausüben kann, ist es vorteilhaft, wenn der untere Grenzwert derart gewählt ist, dass der mindestens eine Wechselstrommotor ausreichend elektrische Energie zum Betrieb des mindestens einen Controllers und der mindestens einen Ansteuerung erzeugt. Damit kann der mindestens eine Controller sein Programm abarbeiten, um die mindestens eine Ansteuerung vor Überspannung zu schützen. Wichtig dabei ist, dass die erzeugte elektrische Energie auch ausreicht, um die mindestens eine Ansteuerung zu versorgen, damit der mindestens eine Controller auch aktiv auf den mindestens einen Wechselstrommotor einwirken kann. Beim Absinken der Generatorspannung unter den unteren Grenzwert kann der mindestens eine Controller zwar die mindestens eine Ansteuerung nicht mehr nutzen, Mess- und Überwachungsfunktionen sind jedoch noch eine gewisse Zeit möglich, so dass beim Ansteigen der Drehzahl des mindestens einen Wechselstrommotors und damit der erzeugten Generatorspannung der mindestens eine Controller sofort wieder durch Erhöhen der Magnetisierung eingreifen kann.

Der obere Grenzwert ist vorzugsweise so gewählt, dass die vom mindestens einen Wechselstrommotor erzeugte Generatorspannung unterhalb der erlaubten Spannung der mindestens einen Ansteuerung liegt. Damit ist die mindestens eine Ansteuerung zuverlässig vor Überspannung geschützt. Zwischen dem unteren und dem oberen Grenzwert ergibt sich ein erlaubter Bereich der Generatorspannung, der vom mindestens einen Controller abgedeckt werden kann. Aufgrund dieses erlaubten Bereichs kann der mindestens eine Controller als Zwei-Punkt-Regler ausgebildet sein, so dass sich ein extrem einfacher aber schnell wirkender Regelalgorithmus ergibt. Da die erfindungsgemäße Vorrichtung ausschließlich eine Schutzfunktion besitzt, spielt das erzielte Regelergebnis nur eine sehr untergeordnete Rolle. Viel wichtiger ist es dagegen, dass bei auftretender Generatorspannung der mindestens eine Controller sehr schnell eingreifen kann, noch ehe die erzeugte Generatorspannung den erlaubten Grenzwert überschreitet. Damit geht bei dieser Art von Regelung Schnelligkeit vor Genauigkeit. Alternativ ist aber auch eine Spannungsregelung auf einem Sollwert beispielsweise als P-, PI-, PD- oder PID-Regler möglich.

Da die vom mindestens einen Wechselstrommotor erzeugte Generatorspannung in der mindestens einen Ansteuerung keinen Abnehmer findet, steigt diese relativ schnell an, so dass der mindestens eine Controller in sehr kurzer Zeit richtig reagieren muss, um die mindestens eine Ansteuerung wirkungsvoll zu schützen. Damit kann aber keine detaillierte Analyse über die Art der mechanischen Energiezufuhr durchgeführt werden, da eine derartige Analyse zu lange Zeit benötigt. Andererseits ist es aber auch wichtig, punktgenau zu reagieren. Im Falle einer großen mechanischen Energiezufuhr muss die Magnetisierung des mindestens einen Wechselstrommotors recht stark erhöht werden, während im Fall geringer Energiezufuhr die Magnetisierung dagegen klein gehalten werden sollte, um die erzeugte Generatorspannung nicht vorzeitig zu vernichten. Zu diesem Zweck ist es vorteilhaft, wenn die Magnetisierung des mindestens einen Wechselstrommotors mit zunehmender Generatorspannung zunimmt. Auf diese Weise wird zwar nicht zwischen den Betriebsfällen schnelle Bewegung des Objekts mit kleiner Kraft einerseits und langsamer Bewegung des Objekts mit großer Kraft andererseits unterschieden, die Magnetisierung wird jedoch durch diese Maßnahme auf einen vernünftigen Anfangswert gesetzt, so dass die Bremswirkung des mindestens einen Objekts ausreicht, um die mindestens eine Ansteuerung zu schützen, ein abruptes Abbremsen des mindestens einen Objekts auf die Geschwindigkeit Null jedoch verhindert wird. Ausgehend von diesem Ausgangspunkt kann dann der mindestens eine Controller durch Regelung den mindestens einen Wechselstrommotor in einen sicheren Betrieb zurückführen, um beispielsweise eine rampenartige Bremswirkung zu realisieren.

Für die Abhängigkeit der Magnetisierung von der Generatorspannung hat sich eine stetige Funktion bewährt. Unter dem Begriff "stetig" ist in diesem Zusammenhang jedoch auch eine digitale Annäherung an eine stetige Funktion zu verstehen.

Insbesondere hat sich für die Abhängigkeit der Magnetisierung von der Generatorspannung eine lineare Funktion bewährt. Damit muss lediglich die Generatorspannung beispielsweise mit einem Digital-Analog-Umformer gemessen werden, wobei durch Multiplikation mit einer Konstanten direkt die Magnetisierung bestimmt ist, die im mindestens einen Wechselstrommotor eingestellt werden soll. Diese Berechnung kann relativ schnell erfolgen, so dass ein zuverlässiger Schutz entsteht.

Um zu erkennen, ob ein normaler Betriebszustand mit üblicher Ansteuerung des mindestens einen Wechselstrommotors oder ein Notzustand im betriebsspannungslosen Generatorbetrieb vorliegt, weist der mindestens eine Controller Prüfmittel auf, mit denen die Versorgungsspannungen der Betriebsspannung und der Generatorspannung ermittelt werden. Die Energieversorgung des mindestens einen Controllers erfolgt dabei von beiden Spannungsquellen, die vorzugsweise gegenseitig entkoppelt sind. Ergeben die Prüfmittel, dass die Betriebsspannung nahe Null liegt, so schaltet der mindestens eine Controller bei vorhandener Generatorspannung in den Notbetrieb, um die Ansteuerung des mindestens einen Wechselstrommotors zu schützen. Bei anliegender Betriebsspannung schaltet der mindestens eine Controller in den Normalbetrieb, um den mindestens einen Wechselstrommotor zu betreiben. In diesem Normalbetrieb kann der mindestens eine Wechselstrommotor antreibend und im Generatorbetrieb bremsend genutzt werden, wobei beim Abbremsen des mindestens einen Objekts dieses im Gegensatz zum Notbetrieb unabhängig von einem mechanischen Anschlag auch zum Stillstand gebracht werden darf.

Da die Prüfung der Betriebsspannung schnell zu erfolgen hat, hat sich für die Prüfmittel mindestens ein Komparator bewährt, der einerseits mit der Betriebsspannung und andererseits mit einer Referenzspannungsquelle verbunden ist. Dabei wird die Betriebsspannung dem mindestens einen Komparator vorzugsweise über einen Spannungteiler oder eine Spannungsschutzvorrichtung, wie beispielsweise eine Zener-Diode zugeführt. Je nach erlaubtem Spannungseingangsbereich des mindestens einen Controllers kann auf derartige Vorrichtungen aber auch verzichtet werden. Der mindestens eine Komparator kann durch Vergleich der Betriebsspannung mit der Referenzspannung in sehr kurzer Zeit entscheiden, ob eine genügende Betriebsspannung für den Normalbetrieb anliegt, oder ob in den Notbetrieb geschaltet werden muss.

Um die vom mindestens einen Wechselstrommotor erzeugte Generatorspannung sicher innerhalb des erlaubten Bereichs zu halten, weist der mindestens eine Controller mindestens einen Regler auf, der die Generatorspannung regelt. Dieser mindestens eine Regler kann als einfacher Zwei-Punkt-Regler ausgebildet sein. Alternativ kann der mindestens eine Regler jedoch auch beispielsweise als Proportionalregler ausgebildet sein. In diesem Fall kann der mindestens eine Regler feinfühlig auf die Magnetisierung des mindestens einen Wechselstrommotors einwirken, um die von ihm erzeugte Generatorspannung auf einen vorgegebenen Wert konstant zu halten.

Für den mindestens einen Regler hat sich ein P-Verhalten bewährt. Dies bedeutet, dass das Ausgangssignal des Reglers proportional zur ermittelten Ist-Soll-Wert-Differenz ist. Auf diese Weise lässt sich eine sehr schnelle Regelantwort realisieren. Der Nachteil dieses Regelverhaltens ist grundsätzlich, dass eine exakte Regelung auf den Sollwert nicht möglich ist. Es verbleibt vielmehr im ausgeregelten Zustand eine Ist-Soll-Wert-Abweichung, die indirekt proportional zum proportionalen Wert P des Reglers ist. Dieser Proportionalwert P kann außerdem nicht beliebig groß gewählt werden, da sonst der gesamte Regler eine ungedämpfte Schwingung erzeugt. Die genannte Abweichung kann jedoch in der Regel toleriert werden, wenn die Spannungsdifferenz zwischen der minimalen Betriebsspannung des Controllers und der maximal erlaubten Spannung der Ansteuerung hinreichend groß ist. Alternativ kann der mindestens eine Regler ein PI-Verhalten aufweisen. Dies bedeutet, dass der mindestens eine Regler sowohl proportional zum auftretenden Regelfehler als auch zu dessen Zeitintegral proportional reagiert, wobei beide Reaktionen addiert werden. Der proportionale Regelanteil liefert eine rasche Regelantwort, was zum Schutz der mindestens einen Ansteuerung wichtig ist. Dagegen bewirkt der Integral-Anteil, dass über eine gewisse Zeit die am mindestens einen Regler anliegende Regeldifferenz zu Null ausgeregelt werden kann. Als weitere Alternative ist ein PD- oder PID-Verhalten denkbar. Dieses unterscheidet sich vom oben beschriebenen P- oder PI-Verhalten dadurch, dass zusätzlich eine zur Zeitableitung des Regelfehlers proportionale Regelantwort erzeugt wird, die zum P- oder PI-Verhalten addiert wird. Der wesentliche Effekt des D-Verhaltens liegt darin, dass hierdurch die Phase des Reglers verschoben wird, so dass die Schwingungsbedingung des Reglers erst bei höheren P-Werten erfüllt ist. Damit kann durch den zusätzlichen D-Anteil des Regelverhaltens der P-Anteil erhöht werden, ohne eine ungedämpfte Schwingung des Reglers zu erzeugen. Dies beschleunigt insbesondere die Regelantwort, so dass der Regler schneller die anliegende Generatorspannung auf den gewünschten Wert bringt. Hierdurch verbessert sich der Schutz erheblich.

Der Erfindungsgegenstand wird beispielhaft anhand der Zeichnung erläutert, ohne den Schutzumfang zu beschränken.

Es zeigt:

Figur 1    ein Prinzipschaltbild einer Vorrichtung mit einem Wechselstrommotor und

Figur 2    ein Detailschaltbild des Controllers gemäß Figur 1.

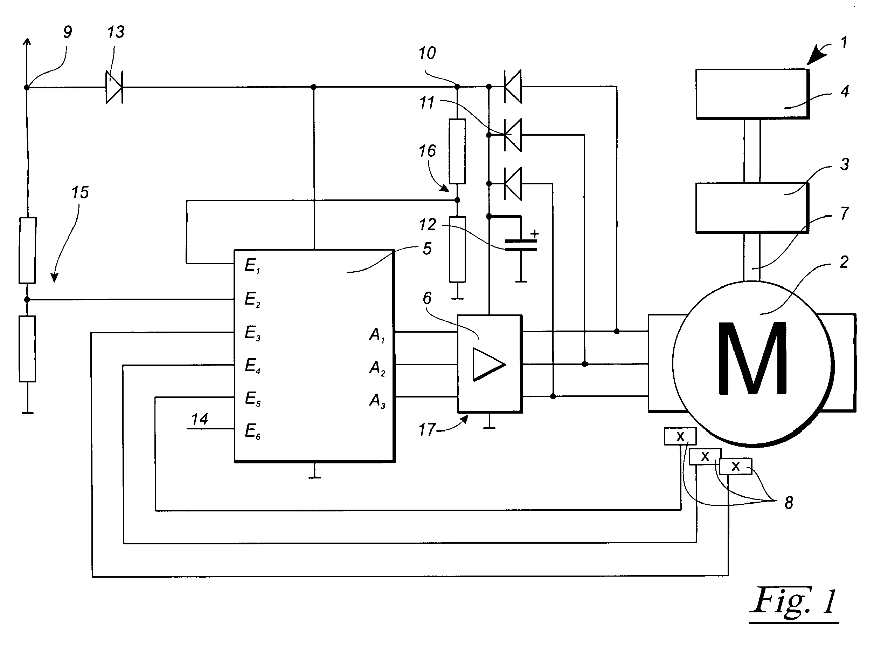

Die Figur 1 zeigt eine Vorrichtung 1 mit einem Wechselstrommotor 2. Der Wechselstrommotor 2 treibt über ein Getriebe 3 ein Objekt 4 an. Dabei kann der Wechselstrommotor 2 das Objekt 4 sowohl beschleunigen als auch bremsen. Hierzu ist der Wechselstrommotor 2 mit einem Controller 5 verbunden, der über Ausgänge $A_1$, $A_2$, $A_3$ einen Leistungstreiber 6, vorzugsweise mit darin enthaltenen MOS-Feldeffekttransistoren ansteuert. Dieser Leistungstreiber 6 bildet eine Ansteuerung 17 für den Wechselstrommotor 2 und ist mit nicht dargestellten Erregerspulen des Wechselstrommotors 2 verbunden, die einen Stator bilden. Diese Erregerspulen erzeugen ein Drehfeld, in dem sich ein Rotor, vorzugsweise mit Permanentmagneten dreht. Dabei wird durch die magnetische Wechselwirkung zwischen dem Stator und dem Rotor ein Drehmoment auf eine Antriebswelle 7 ausgeübt, die zum Getriebe 3 führt.

Um einerseits die Geschwindigkeit und andererseits die aktuelle Rotorposition des Wechselstrommotors 2 bestimmen zu können, weist dieser Sensoren 8 auf, die lediglich beispielhaft als Hall-Sensoren dargestellt sind. Diese erfassen das Magnetfeld des Rotors in verschiedenen Winkellagen, so dass sich hieraus die Rotorposition und dessen Drehzahl berechnen lässt. Die Sensoren 8 sind über Eingänge $E_3$, $E_4$ und $E_5$ mit dem Controller 5 verbunden.

Der Controller 5 und der Leistungstreiber 6 werden gemeinsam von einer Betriebsspannung 9 mit elektrischer Energie versorgt, die eine konstante Spannung und den zum Betrieb erforderlichen Strom liefert. Soll der Wechselstrommotor 2 das Objekt 4 beschleunigen oder abbremsen, so erzeugt der Controller 5 an seinen Ausgängen $A_1$, $A_2$ und $A_3$ pulsbreitenmodulierte Signale, um den Stator des Wechselstrommotors 2 entsprechend anzusteuern.

Es kann nun vorkommen, dass das Objekt 4 bewegt wird, wobei die Betriebsspannung 9 abgeschaltet ist. Beispielsweise kann das Objekt 4 in der Schwebe gehalten sein und sich durch äußere Manipulationen lösen. Auf diese Weise beschleunigt das Objekt 4 über das nicht selbsthemmende Getriebe 3 den Rotor des Wechselstrommotors 2. Damit kommt der Wechselstrommotor 2 in den Generatorbetrieb, in dem er die eingebrachte mechanische Energie in elektrische Energie umwandelt. Da der Leistungstreiber 6 derart aufgebaut ist, dass er lediglich Energie zum Wechselstrommotor 2 führen kann, ergibt sich in diesem Betriebszustand das Problem, dass die vom Wechselstrommotor 2 erzeugte Energie nicht abgeführt werden kann. Damit steigt die vom Wechselstrommotor 2 erzeugte Generatorspannung 10, die auch Zwischenkreisspannung genannt wird, rasch an und kann ohne weitere Maßnahmen recht hohe Werte annehmen. Diese hohen Spannungswerte führen jedoch zur Zerstörung des Leistungstreibers 6.

Um diesen Umstand zu vermeiden, werden der Controller 5 und der Leistungstreiber 6 zusätzlich von der Generatorspannung 10 mit elektrischer Energie versorgt. Zu diesem Zweck wird die vom Wechselstrommotor 2 erzeugte Wechselspannung mittels eines Gleichrichters 11 gleichgerichtet und mittels eines Kondensators 12 geglättet. Damit die Generatorspannung 10 die ggfs. anliegende Betriebsspannung 9 nicht stört, werden beide durch eine lediglich beispielhaft dargestellte Diode 13 entkoppelt. Auf diese Weise werden der Controller 5 und der Leistungstreiber 6 auch bei abgeschalteter Betriebsspannung 9 mit Energie versorgt, wenn eine genügend hohe Generatorspannung 10 vorhanden ist.

Damit der Controller 5 unterscheiden kann, ob der Wechselstrommotor 2 in üblicher Weise angesteuert werden soll oder - bei abgeschalteter Betriebsspannung 9 - ein entsprechendes Notfallprogramm ablaufen soll, wird die Betriebsspannung 9 über einen Spannungsteiler 15 an einem weiteren Eingang $E_2$ dem Controller 5 zugeführt. Durch Messen der Spannung am Eingang $E_2$, beispielsweise mit einem Analog-Digital-Umformer, ist der Controller 5 damit in der Lage, zu erkennen, ob die Betriebsspannung 9 im Sollbereich liegt und daher ein normales Betriebsprogramm zur Ansteuerung des Wechselstrommotors 2 ablaufen kann. Bei Fehlen der Betriebsspannung 9 läuft dagegen bei vorhandener Generatorspannung ein Notprogramm ab. Für dieses Notprogramm benötigt der Controller 5 auch noch die Information über die anliegende Generatorspannung 10, die zu diesem Zweck dem Controller 5 über einen weiteren Spannungsteiler 16 einem Eingang $E_1$ zugeführt wird, hinter dem ein Analog-Digital-Umformer liegt.

Für den Betrieb benötigt der Controller 5 noch eine Information bezüglich der anzulegenden Drehzahl des Wechselstrommotors 2. Ein entsprechend codierter numerischer Wert der Drehzahl 14 wird dem Controller 5 über einen Eingang $E_6$ zugeführt, wobei offen gelassen ist, ob der Eingang $E_6$ eine oder mehrere Leitungen umfasst. Weist der Eingang $E_6$ nur eine Leitung auf, so wird die Drehzahl 14 seriell an den Controller 5 übermittelt. Stehen hierfür mehrere Leitungen zur Verfügung, so kann auch eine parallele oder teils serielle, teils parallele Übertragung genutzt werden.

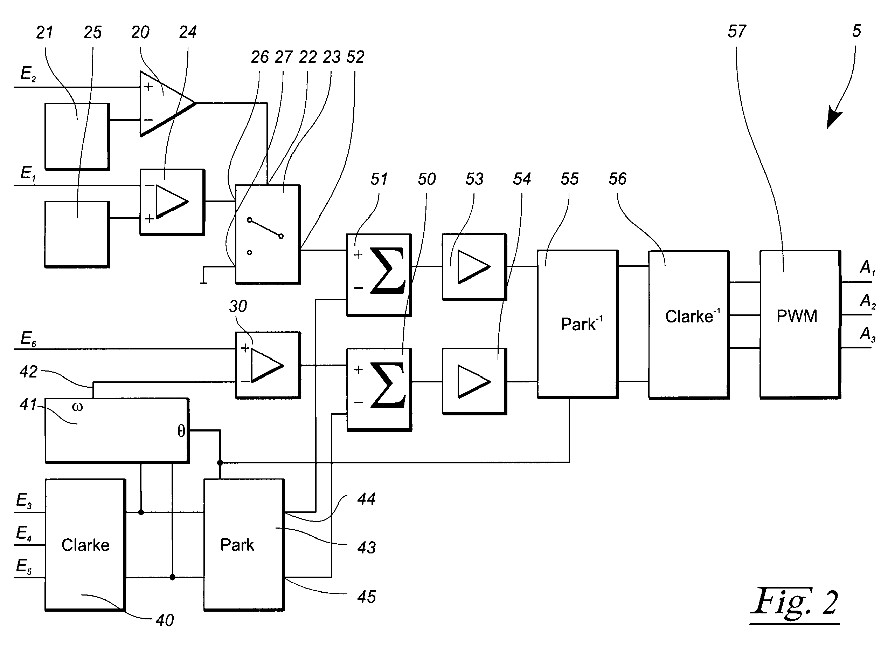

Die Funktion des Controllers 5 wird anhand des Detailschaltplans gemäß Figur 2 erläutert, wobei gleiche Bezugszeichen gleiche Teile benennen. Der Controller 5 verfügt über die bereits erwähnten Eingänge $E_1$ bis $E_6$ und die ebenfalls erwähnten Ausgänge $A_1$ bis $A_3$. Die Spannungsversorgung des Controllers 5 ist in Figur 2 der Einfachheit halber nicht dargestellt.

Der Eingang $E_2$, der mit der Betriebsspannung 9 über den Spannungsteiler 15 verbunden ist, führt zu einem Komparator 20, der die am Eingang $E_2$ anliegende Spannung mit einer internen Referenzspannungsquelle 21 vergleicht. Liegt die am Eingang $E_2$ anliegende Spannung über der Ausgangsspannung der Referenzspannungsquelle 21, so liefert der Komparator 20 an seinem Ausgang ein logisches 1-Signal, anderenfalls ein 0-Signal. Der Komparator 20 ist ausgangsseitig mit einem Steuereingang 22 eines Umschalters 23 verbunden.

Der Eingang $E_1$, der über den Spannungsteiler 16 mit der Generatorspannung 10 verbunden ist, führt zu einem Ist-Wert-Eingang eines Reglers 24, der vorzugsweise ein P-, PI-, PD- oder PID-Verhalten hat. Ein Sollwert-Eingang des Reglers 24 ist mit einem Sollwert-Geber 25 verbunden, der eine variabel vorgebbare Sollwertspannung liefert. Die Ausgangsspannung des Sollwert-Gebers 25 definiert den Sollwert der Generatorspannung 10, die vom Controller 5 eingeregelt wird. Der Regler 24 ist mit einem Signaleingang 26 des Umschalters 23 verbunden, der bei zu niedriger oder fehlender Betriebsspannung 9 aktiv ist, um die Magnetisierung des Wechselstrommotors 2 in linearer Abhängigkeit von der erzeugten Generatorspannung 10 zu beeinflussen. Der Umschalter 23 ist über einen Signalweg 27 mit Masse, also 0V verbunden, um bei normalem Betrieb mit anliegender Betriebsspannung 9 ein Null-Signal an einem Ausgang 52 des Umschalters 25 zu erzeugen. Alternativ könnte der Signalweg 27 auch mit einer Bremserkennungsschaltung verbunden sein, die bei negativem Drehmoment die Magnetisierung des Wechselstrommotors 2 erhöht.

Über die Eingänge E₃, E₄ und E₅ erhält der Controller 5 die Informationen von den Sensoren 8, die die jeweils aktuellen Magnetfeldwerte des Rotors des Wechselstrommotors 2 wiedergeben. Die Signale an den Eingängen $E_3$ bis $E_5$ werden einer Clarke-Transformation unterworfen. Diese hat die folgende mathematische Definition:

$$\begin{pmatrix} I_\alpha \\ I_\beta \end{pmatrix} = \frac{2}{3} \begin{pmatrix} 1 & -\dfrac{1}{2} & -\dfrac{1}{2} \\ 0 & \dfrac{\sqrt{3}}{2} & -\dfrac{\sqrt{3}}{2} \end{pmatrix} \begin{pmatrix} I_U \\ I_V \\ I_W \end{pmatrix}$$

Diese Transformation wandelt den dreidimensionalen Vektor an den Eingängen $E_3$ bis $E_5$ in einen zweidimensionalen Vektor um, ohne dabei Information zu verlieren. Der Grund hierfür liegt darin, dass die Summe aller Magnetfeldwerte an den Sensoren 8 stets 0 ist. Damit reicht eine zweidimensionale Information über die Magnetfeldwerte, nämlich in Magnetfeldrichtung des Rotors und im Winkel 90° geteilt durch die Polzahl des Rotors aus. Dies wird von der Clarke-Transformation durchgeführt.

Ausgangsseitig ist die Clarke-Transformation 40 mit einer Rechenschaltung 41 verbunden, die aus diesen Werten zeitabhängig den aktuellen Drehwinkel θ und die aktuelle Drehzahl ω des Rotors bestimmt. Die dabei ermittelte aktuelle Drehzahl ω ist über einen Signalweg 42 mit dem Regler 30 verbunden, der auf diese Weise einen Ist-Soll-Wert-Vergleich durchführt. Die Ergebnisse der Clarke-Transformation 40 werden außerdem einer Park-Transformation 43 unterworfen. Diese Park-Transformation 43 transformiert die Signale der Clarke-Transformation 40 in das sich drehende System des Rotors, so dass man keine frequenzabhängigen Signale mehr hat. Das Ergebnis der Park-Transformation ist ein Vektor, der über eine Umdrehung des Rotors des Wechselstrommotors 2 im Wesentlichen konstant ist. Die Park-Transformation ist in folgender Weise definiert:

$$\begin{pmatrix} I_d \\ I_q \end{pmatrix} = \begin{pmatrix} \cos(\theta) & \sin(\theta) \\ -\sin(\theta) & \cos(\theta) \end{pmatrix} \begin{pmatrix} I_\alpha \\ I_\beta \end{pmatrix}$$

Es handelt sich dabei um eine gewöhnliche Drehmatrix, wobei der Winkel θ der aktuelle Drehwinkel des Rotors ist. Dieser wird aus der Rechenschaltung 41 gewonnen und der Park-Transformation 43 zugeführt. Das Ergebnis der Park-Transformation 43 ist ein zweidimensionaler Vektor, der das Statorfeld in Richtung der Magnetfeldachse des Rotors an einem Ausgang 44 und im Winkel von 90° geteilt durch die Polzahl des Rotors zur Feldrichtung des Rotors an einem Ausgang 45 ausgibt.

Dabei ist zu berücksichtigen, dass das Statorfeld am Ausgang 45 ein maximales Drehmoment auf den Rotor ausübt, während das Statorfeld in Feldrichtung des Rotors lediglich Blindleistung liefert, die im Wechselstrommotor 2 in Wärme umgewandelt wird. Aus diesem Grund wird der Controller 5 bei anliegender Betriebsspannung 9 die Ausgänge 44, 45 derart ansteuern, dass im Antriebsfall des Wechselstrommotors 2, also bei einem Drehmoment in Drehrichtung, nur der Ausgang 45 aktiv sein wird. Beim Abbremsen des Wechselstrommotors 2, also bei der Erzeugung eines Drehmoments entgegen der Drehrichtung des Rotors, wird dagegen der Ausgang 44 aktiv sein, um die vom Wechselstrommotor 2 erzeugte elektrische Energie wirkungsvoll innerhalb desselben in Wärme umzusetzen.

Der Eingang E6 liefert unter normalen Betriebsbedingungen, also bei anliegender Betriebsspannung 9 den Sollwert für die Drehzahl 14 des Wechselstrommotors 2. Er ist mit einem weiteren Regler 30 mit P-, PI-, PD-oder PID-Verhalten zur Drehzahlregelung des Wechselstrommotors 2 verbunden. Zu diesem Zweck ist der Regler 30 ausgangsseitig mit einem nicht invertierenden Eingang des Summierers 50 verbunden. Der Summierer 50 ist außerdem mit dem Ausgang 45 der Park-Transformation 43 invertierend verbunden. Ein weiterer Summierer 51 ist nicht invertierend mit einem Ausgang 52 des Umschalters 23 verbunden. Er ist außerdem invertierend mit dem Ausgang 44 der Park-Transformation 43 verbunden. Diese Summierer 50, 51 bewirken einen Ist-Soll-Wert-Vergleich zwischen den Ist-Werten an den Ausgängen 44, 45 und den entsprechenden Sollwerten. Sie sind ausgangsseitig mit Reglern 53, 54 verbunden, die als P-, PI-, PD- oder PID-Regler realisiert sind. Ausgangssignale dieser Regler 53, 54 sind mit einer inversen Park-Transformation 55 verbunden. Die inverse Park-Transformation 55 entspricht im Wesentlichen der Park-Transformation 43 mit umgekehrter Drehrichtung. Sie ist in folgender Weise definiert:

$$\begin{pmatrix} I_\alpha \\ I_\beta \end{pmatrix} = \begin{pmatrix} \cos(\theta) & -\sin(\theta) \\ \sin(\theta) & \cos(\theta) \end{pmatrix} \begin{pmatrix} I_d \\ I_q \end{pmatrix}$$

Dabei wird wiederum der aktuelle Drehwinkel θ benötigt, der von der Rechenschaltung 41 der inversen Park-Transformation 55 zugeführt wird. Die inverse Park-Transformation 55 ist mit einer inversen Clarke-Transformation 56 verbunden, die in folgender Weise definiert ist:

$$\begin{pmatrix} I_U \\ I_V \\ I_W \end{pmatrix} = \frac{2}{3} \begin{pmatrix} 1 & 0 \\ -\frac{1}{2} & \frac{\sqrt{3}}{2} \\ -\frac{1}{2} & -\frac{\sqrt{3}}{2} \end{pmatrix} \begin{pmatrix} I_\alpha \\ I_\beta \end{pmatrix}$$

Diese erzeugt aus dem zweidimensionalen Vektor der inversen Park-Transformation 55 wieder einen dreidimensionalen Vektor zur Ansteuerung der Stator-Spulen des Wechselstrommotors 2.

Ausgangsseitig ist die inverse Clarke-Transformation 56 mit einem Pulsbreitenmodulator 57 verbunden, der die entsprechenden Stromwerte für die Statorspulen des Wechselstrommotors 2 in ein gepulstes Signal mit variierender Pulsbreite umsetzt. Dieses pulsbreitenmodulierte Signal wird unmittelbar an den Ausgängen $A_1$ bis $A_3$ zur Verfügung gestellt, um den Leistungstreiber 6 anzusteuern. Die Pulsbreitenmodulation hat den Vorteil, dass nur eine Signalleitung pro Stator-Spule benötigt wird. Außerdem ergibt sich eine recht einfache Ansteuerung des Leistungstreibers 6, da im Gegensatz zu analogen Spannungen lediglich digitale Spannungen erzeugt werden müssen. Damit reicht für den Leistungstreiber 6 ein einfacher Schalttransistor aus, der den Strom an- bzw. ausschalten kann.

## Bezugszeichenliste

| | | | |
|---|---|---|---|
| 1 | Vorrichtung | 44 | Ausgang |
| 2 | Wechselstrommotor | 45 | Ausgang |
| 3 | Getriebe | 50 | Summierer |
| 4 | Objekt | 51 | Summierer |
| 5 | Controller | 52 | Ausgang |
| 6 | Leistungstreiber | 53 | Regler |
| 7 | Antriebswelle | 54 | Regler |
| 8 | Sensor | 55 | inverse Park-Transformation |
| 9 | Betriebsspannung | 56 | inverse Clarke-Transformation |
| 10 | Generatorspannung | 57 | Pulsbreitenmodulation |
| 11 | Gleichrichter | θ | Aktueller Drehwinkel |
| 12 | Kondensator | ω | Aktuelle Drehzahl |
| 13 | Diode | | |
| 14 | Drehzahl | | |
| 15 | Spannungsteiler | | |
| 16 | Spannungsteiler | | |
| 17 | Antsteuerung | | |
| 20 | Komparator | | |
| 21 | Referenzspannungsquelle | | |
| 22 | Steuereingang | | |
| 23 | Umschalter | | |
| 24 | Regler | | |
| 25 | Soll-Wert-Geber | | |
| 26 | Signalweg | | |
| 27 | Signalweg | | |
| 30 | Regler | | |

(fortgesetzt)

| 40 | Clarke-Transformation |
| 41 | Rechenschaltung |
| 42 | Signalweg |
| 43 | Park-Transformation |

**Patentansprüche**

1. Vorrichtung mit mindestens einem Wechselstrommotor (2), mindestens einer Ansteuerung (17) und mindestens einem von dem mindestens einen Wechselstrommotor (2) angetriebenen Objekt (4), wobei der mindestens eine Wechselstrommotor (2) eine veränderbare Magnetisierung aufweist, um bei bewegtem Objekt (4) im Generatorbetrieb erzeugte elektrische Energie in Wärme umzuwandeln, **dadurch gekennzeichnet, dass** die Vorrichtung (1) mindestens einen Controller (5) aufweist, der bei abgeschalteter Betriebsspannung (9) vor mindestens einer Generatorspannung (10) des mindestens einen Wechselstrommotors (2) mit elektrischer Energie versorgt wird, wobei der mindestens eine Controller (5) die Magnetisierung des mindestens einen Wechselstrommotors (2) derart beeinflusst, dass dessen Generatorspannung (10) zwischen zwei vorgegebenen Grenzwerten liegt.

2. Vorrichtung nach Anspruch 1, **dadurch gekennzeichnet, dass** der untere Grenzwert derart gewählt ist, dass die vom mindestens einen Wechselstrommotor (2) erzeugte Generatorspannung (10) zum Betrieb des mindestens einen Controllers (5) und der mindestens einen Ansteuerung (17) ausreicht.

3. Vorrichtung nach Anspruch 1 oder 2, **dadurch gekennzeichnet, dass** der obere Grenzwert derart gewählt ist, dass die vom mindestens einen Wechselstrommotor (2) erzeugte Generatorspannung (10) unterhalb eines erlaubten Spannungsbereichs der mindestens einen Ansteuerung (17) liegt.

4. Vorrichtung nach mindestens einem der Ansprüche 1 bis 3, **dadurch gekennzeichnet, dass** die Magnetisierung des mindestens einen Wechselstrommotors (2) zwischen den Grenzwerten mit zunehmender Generatorspannung (10) zunimmt.

5. Vorrichtung nach mindestens einem der Ansprüche 1 bis 4, **dadurch gekennzeichnet, dass** die Magnetisierung des mindestens einen Wechselstrommotors (2) eine stetige Funktion der Generatorspannung (10) des mindestens einen Wechselstrommotors (2) ist.

6. Vorrichtung nach mindestens einem der Ansprüche 1 bis 5, **dadurch gekennzeichnet, dass** die Magnetisierung wenigstens im Teilbereich zwischen den Grenzwerten eine lineare Funktion der Generatorspannung (10) ist.

7. Vorrichtung nach mindestens einem der Ansprüche 1 bis 6, **dadurch gekennzeichnet, dass** der mindestens eine Controller (5) von einer Betriebsspannung (9) und vom mindestens einen Wechselstrommotor (2) mit elektrischer Energie versorgbar ist, wobei der mindestens eine Controller (5) Prüfmittel zum Erkennen der Betriebsspannung (9) aufweist.

8. Vorrichtung nach Anspruch 7, **dadurch gekennzeichnet, dass** die Prüfmittel von mindestens einem Komparator (20) gebildet sind, der einerseits mit der Betriebsspannung (9) und andererseits mit einer Referenzspannungsquelle (21) verbunden ist.

9. Vorrichtung nach mindestens einem der Ansprüche 1 bis 8, **dadurch gekennzeichnet, dass** der mindestens eine Controller (5) mindestens einen Regler (24) aufweist, der die vom mindestens einen Wechselstrommotor (2) erzeugte Generatorspannung (10) regelt.

10. Vorrichtung nach Anspruch 9, **dadurch gekennzeichnet, dass** der mindestens eine Regler (24) ein P-, PI-, PD- oder PID-Verhalten aufweist.

EP 3 154 189 A2

_Fig. 1_

*Fig. 2*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19509974 C2